# EUROPEAN PATENT SPECIFICATION

(11) **EP 1 830 425 B1**
(45) Date of publication and mention of the grant of the patent: **02.09.2015**
(21) Application number: 06110663.9
(22) Date of filing: 03.03.2006
(51) Int. Cl.: H01M 8/02, H01M 8/12, H01M 8/24

(54) **Interconnect set of planar solid oxide fuel Cell having flow paths**
Interkonnektorreihe mit Strömungsstruktur für Hochtemperatur-Brennstoffzellen
Ensemble d'éléments d'interconnexion avec des voies d'écoulement pour piles à combustible à haute temperature

(43) Date of publication of application: 05.09.2007
(73) Proprietor: Atomic Energy Council - Institute of Nuclear Energy Research, Lungtan, Taoyuan, Taiwan (TW)
(72) Inventor: CHYOU, Yau-Pin, 114, Taipei City 114 (TW); CHENG, Yung-Neng, 320, Jhongli City, Taoyuan County (TW); LIN, Kin-Fu, 106, Taipei City (TW)
(74) Representative: Beck, Michael Rudolf

(56) References cited:
- EP-A- 1 253 659
- EP-A1- 1 447 869
- WO-A-02/069426
- WO-A1-2005/034277
- TW-U- M 281 305
- US-A1- 2005 042 487
- WEN T-L ET AL: "Material research for planar SOFC stack" SOLID STATE IONICS, NORTH HOLLAND PUB. COMPANY. AMSTERDAM, NL, vol. 148, no. 3-4, June 2002 (2002-06), pages 513-519, XP004358565 ISSN: 0167-2738
- LI X ET AL: "Review of bipolar plates in PEM fuel cells: Flow-field designs" INTERNATIONAL JOURNAL OF HYDROGEN ENERGY, ELSEVIER SCIENCE PUBLISHERS B.V., BARKING, GB, vol. 30, no. 4, March 2005 (2005-03), pages 359-371, XP004739235 ISSN: 0360-3199
- NAYLOR P D ET AL: "PERFORMANCE DETERMINING CHARACTERISTICS OF SOLID POLYMER FUEL CELL ELECTRODES" POWER SOURCES.RESEARCH AND DEVELOPMENT IN NON-MECHANICAL ELECTRICAL POWER SOURCES,APRIL 91,BOURNEMOUTH, LEATHERHEAD,SURREY, GB, vol. 13, 8 April 1991 (1991-04-08), pages 253-261, XP000490942

## Description

### Field of the invention

The present invention relates to an interconnect set; more particularly, relates to adhering more than one electricity-generating substrate and adhering more than one interconnect to obtain a small-scaled FC stack with a large scale of chemical reaction area and a greatly saved space according to user's actual requirements, where operational fluids of the FC stack are evenly and smoothly flowed on surfaces of the interconnects.

### Description of the Related Art

- Interconnects are one of the key components in a planar solid oxide fuel cells (SOFC), which is made of a kind of ceramic or metal. The main function of an interconnect is to link the cathode and the anode of two adjacent single-cells while playing a role as a physical barrier. A reduction environment is protected here by isolating an electrode of air and an electrode of fuel. Just the like, an oxidation environment is also protected by isolating an electrode of fuel and an electrode of air. Thus, an interconnect has to meet the following conditions:
(a) Under the working temperature of a SOFC, the interconnect has to be of good conductivity.
(b) Under the temperature of 800°C of a reduction environment or of an oxidation environment, the interconnect has to be of a proper size, microstructure, chemical property and phase stability.
(c) The permeation between the oxygen and the hydrogen has to be reduced in the interconnect to avoid direct interaction.
(d) Under the environment of room temperature or high temperature, the thermal expansion coefficient of the interconnect has to be comparable to that of the adjacent components.
(e) Under the environment of high temperature, diffusion reactions between the interconnect and the adjacent components have to be prevented.
(f) The interconnect has to be of good thermal conductivity.
(g) The interconnect has to be well anti-oxidative, anti-vulcanized and anti-carbonized.
(h) The interconnect has to be obtained and produced easily to lower the cost.
(i) The interconnect has to be of good high-temperature strength and be anti-creepy.

Metal interconnects for SOFC have become the main stream and can be chromium-based or iron-based. Chromium-based interconnects appeared have higher temperature strength but are more expensive, more difficult to produce and have bad expansibility as comparing to those of an iron-based interconnects. Therefore, the trend on the interconnect development now is on developing iron-based interconnects. Besides, if the operation temperature of a SOFC can be lowered to 700°C, a ferritic stainless steel can be used as a material for producing an interconnect with greatly lowered cost.

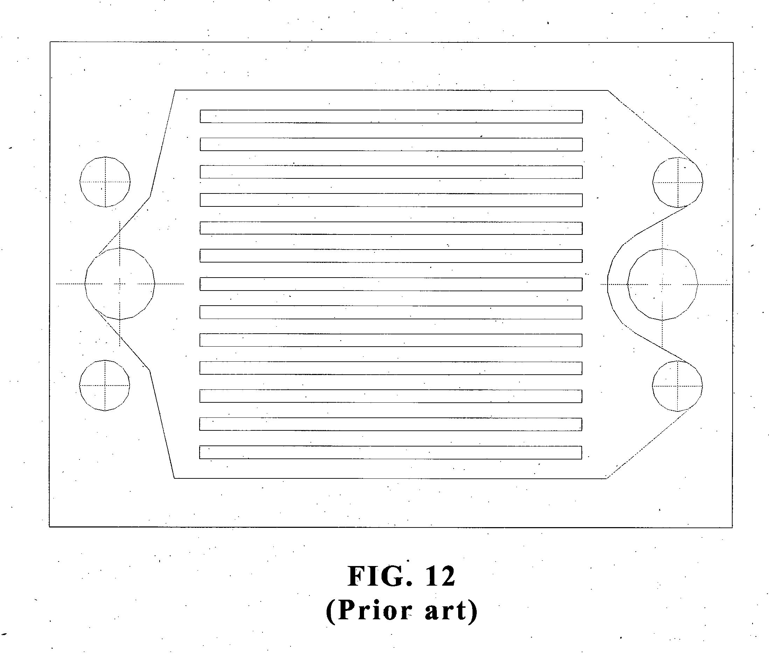

Considerations for a general interconnect of a SOFC are usually on the number of the inlets and outlets and their positions, yet seldom on the uniformness of the velocity of the operation flows in the flow channel of the interconnect. Often, the lesser the number of the inlets and outlets is, the slower the velocity of the fluid in the flow channel is. On the contrary, the more the number of the inlets and outlets is, the faster the velocity of the fluid is, although with a more complex design as a whole, with an increased complexity in production, and with a much more cost. Consequently, there are few SOFCs that comprise more than three inlets and outlets for an operation flow. Please refer to FIG. 12, which is a view showing flow paths of a prior art as known e.g. from TW M281305 U. As shown in the figure, the interconnect comprises two inlets and one outlet, where the velocity of the operation flow is distributed evenly and the velocity of the operation flow between the inlets and the outlet is higher than that at two sides.

In "Three-dimensional thermo- fluid electrochemical modeling of planar SOFC stacks" by K. P. Recknagle, R. E. Williford, L. A. Chick, D. R. Rector, and M. A. Khaleel (Journal of Power Sources, 113, pp. 109-114, 2003), the impacts on the distribution of the temperature as well as current density in an electricity-generating substrate with a flow channel deployment of cross-flow, co-flow or counterflow are discussed. In general, the distribution of the temperature as well as current density with a flow channel deployment of co-flow is most even; the fuel utilization with a flow channel deployment of counterflow is higher; and the highest distribution of the temperature as well as current density with a flow channel deployment of cross-flow is at the interflow of the fuel at the inlet and the air at the outlet.

In "3-D model calculation for plane SOFC" by H. Yakabe, T. Oyiwara, M. Hishinuma, and I. Yasuda (Journal of Power Sources, 102, pp. 144-154, 2001), an analysis model for a flow channel is established to efficiently analyze the velocity distribution in the flow channel. The inlet and outlet of the flow channel are in an anti-symmetrical design with one inlet and one outlet. The emphasis is only on the calculation of the velocity distribution in the flow channel.

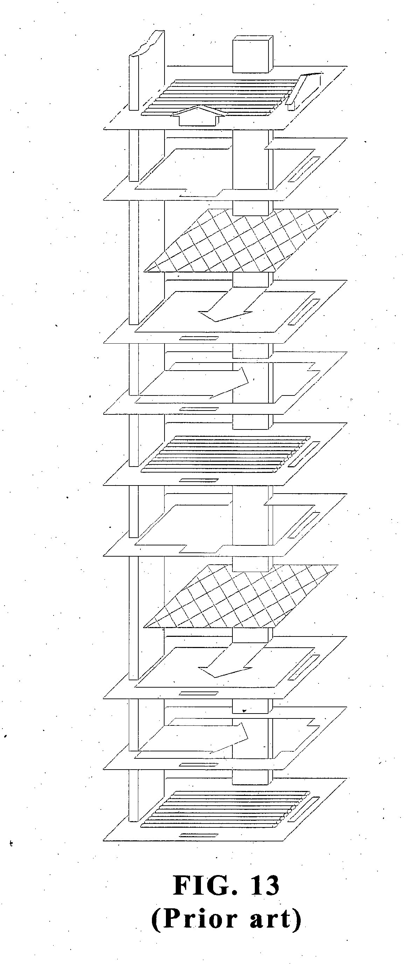

In "Material research for planer SOFC stack" by T.-L. Wen, D. Wang, M. Chen, H. Tu, Z. Zhang, H. Nie and W. Huang (Solid State Ionics, 148, pp513-519, 2002), the materials for the components of a FC stack are described with a figure of the components of the FC stack (as shown in FIG.13). The flow channel of an interconnect is deployed as a cross-flow channel with a symmetrical design of two inlets and two outlets, yet in lack of considering the uneven velocity in the flow channel.

The German patent of DE10039024A1 is a method for assembling a glass-ceramics-sealed SOFC stack. A co-flow for a glass-ceramics-sealed SOFC stack is designed, where the flow directions of the fuel and the air are the same; flow areas are formed by ribs and furrows in an interconnect; yet the design of the number of inlets and outlets and the detail design of the flow area are not described.

The above prior arts provide no solution for the problems concerning a large-scaled electricity-generating substrate, such as weak structural robustness, limited chemical reaction area, big space requirement and little electricity generation per certain area. Hence, the prior arts do not fulfill users' requests on actual use.

Finally, an interconnect set comprising the features of the preamble portion of claim 1 is known from WO 2005/034277 A1. WO 2005/034277 A1 suggests a cross-flow arrangement with a plurality of radial inlets and outlets in an anode frame as well as a cathode frame.

### Summary of the invention

The main purpose of the present invention is to adhere more than one electricity-generating substrate and adhere more than one interconnect to obtain a small-scaled FC stack with a large scale of chemical reaction area and a greatly saved space according to user's actual requirements, where operational fluids of the FC stack are evenly and smoothly flowed on surfaces of the interconnects.

To achieve the above purpose, the present invention is an interconnect set of a planar SOFC having flow paths, comprising an interconnect set and a seal, where more than one interconnect is adhered to each other according to user's actual requirements to obtain the interconnect set; each interconnect comprises a first flow area and a second flow area; the first flow area is deposed on a surface of the interconnect; the first flow area has a first channel; the first flow area has more than one first inlet at an end connected with the first channel and has a first outlet at the opposite end connected with the first channel; the second flow area is deposed on the other surface of the interconnect; the second flow area has a second channel; the second flow area has more than one second inlet at an end connected with the second channel and has a second outlet at the opposite end connected with the second channel; two second inlets are deposed at two sides of a first outlet of the first flow area; the second outlet is deposed between two first inlets of the first flow area; each of the first and the second channels has a plurality of ribs; every two adjacent ribs have a vertical or horizontal furrow in between; flow paths are obtained on each of the first and the second flow areas by serially connecting a plurality of furrows; the seal is correspondingly deposed over rims of the interconnect set to prevent operational fluids from leaking out or mixing up; and, by adhering the interconnects in a serial and/or parallel way according to user's actual requirements, a large scale of chemical reaction area is obtained, difficulties in assembling an FC stack is reduced, and a great sum of space is saved. Accordingly, a novel interconnect set of a planar SOFC having flow paths is obtained.

### Brief descriptions of the drawings

The present invention will be better understood from the following detailed descriptions of the preferred embodiments according to the present invention, taken in conjunction with the accompanying drawings, in which
- FIG.1: is a perspective view showing a surface of a preferred embodiment according to the present invention;
- FIG.2: is a perspective view showing the other surface of the preferred embodiment according to the present invention;
- FIG.3: is an explosive view showing an assembly of the preferred embodiment according to the present invention;
- FIG.4: is a perspective view showing the assembly of the preferred embodiment according to the present invention;
- FIG.5 and FIG.6: are views showing flow paths of operational fluids according to the preferred embodiment of the present invention;
- FIG.7: is a perspective view showing a surface of another preferred embodiment according to the present invention;
- FIG.8: is a perspective view showing the other surface of the another preferred embodiment according to the present invention;
- FIG.9: is a view showing two interconnects adhered in a serial way according to the preferred embodiment of the present invention;
- FIG.10: is a view showing four interconnects adhered both in a serial and a parallel ways according to the preferred embodiment of the present invention;
- FIG.11: is a view showing another assembly of the preferred embodiment according to the present invention;
- FIG.12: is a view showing flow paths of a prior art; and
- FIG.13: is an explosive view showing an assembly of the prior art.

### Description of the preferred embodiments

The following descriptions of the preferred embodiments are provided to understand the features and the structures of the present invention.

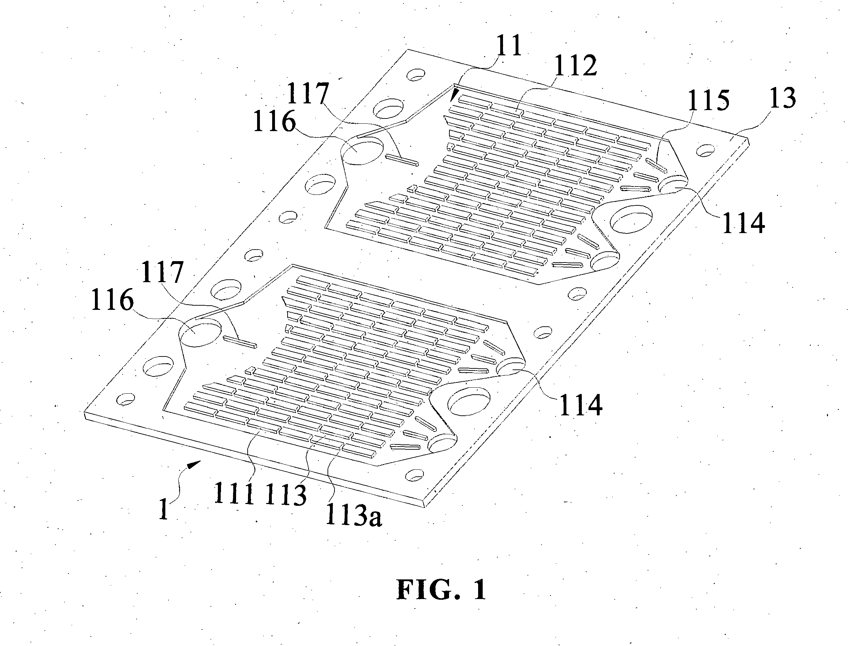

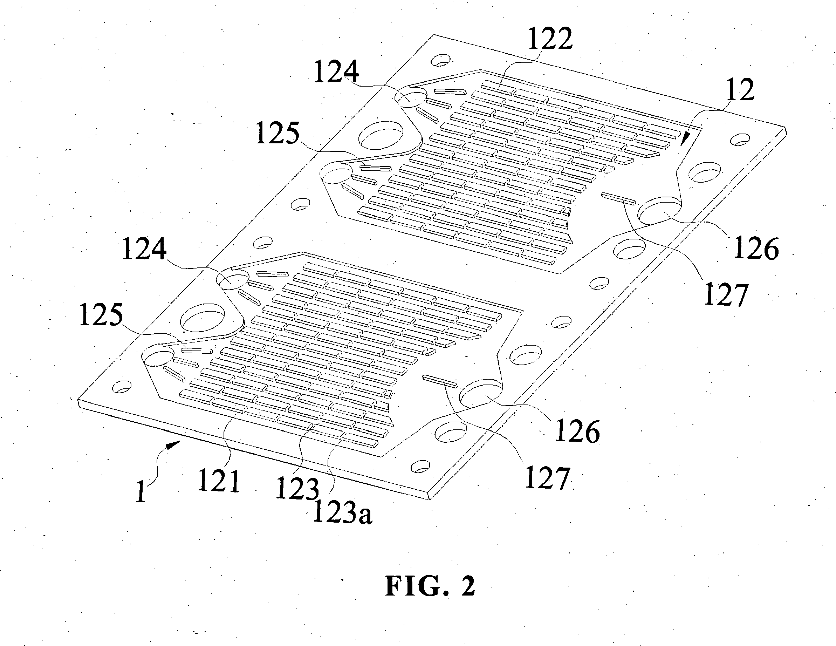

Please refer to FIG. 1 and FIG.2, which are perspective views showing two opposite surfaces of a preferred embodiment according to the present invention. As shown in the figures, the present invention is an interconnect set of a planar solid oxide fuel cell (SOFC) having flow paths, comprising an interconnect set 1 and a seal 13.

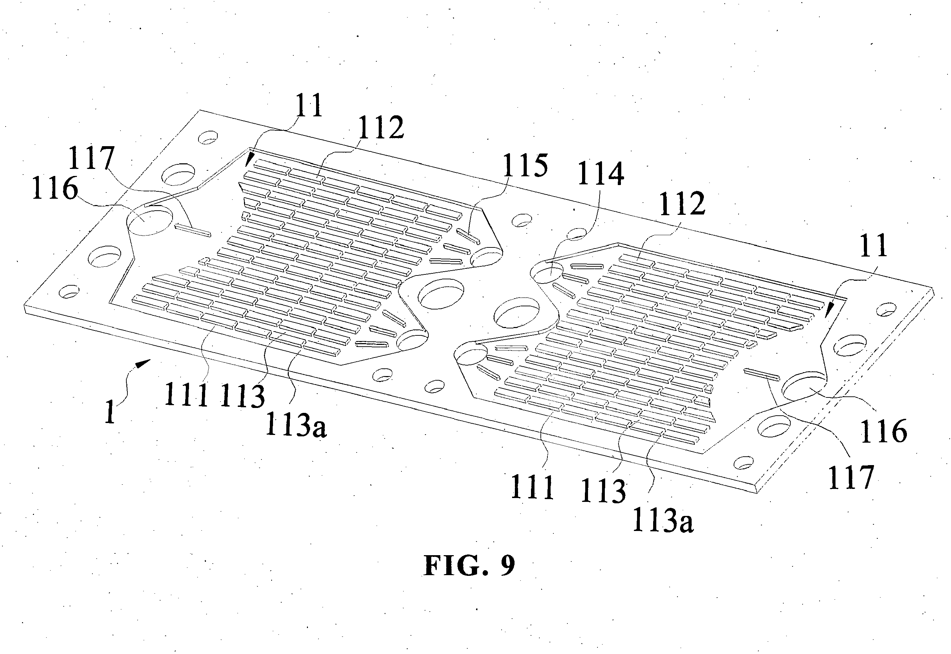

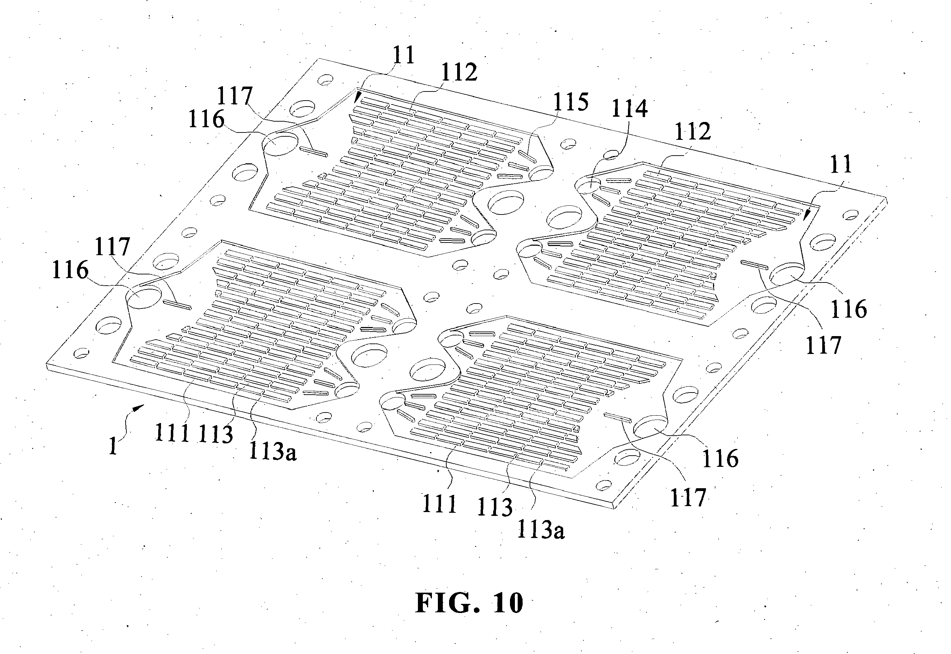

The interconnect set 1 comprises more than one interconnect adhered to each other according to user's actual requirements. (Please refer to FIG.1, FIG.9 and FIG.10, which show interconnects adhered in a parallel way, in a serial way and both in a parallel and a serial ways.) Each interconnect comprises a first flow area 11 and a second flow area 12. The first flow area 11 is deposed on a surface of the interconnect set 1; the first flow area 11 has a first channel 111; more than one first inlet 114 connected with the first channel 111 is deposed at an end of the first flow area 11; and, at least one first outlet 116 connected with the first channel 111 is deposed at the other end of the first flow area 11. The second flow area 12 is deposed on the opposite surface of the interconnect set 1; the second flow area 12 has a second channel 121; more than one second inlet 124 connected with the second channel 121 is deposed at an end of the second flow area 12; two second inlets 124 are located at two sides of a first outlet 116 of the first flow area 11; at lease one second outlet 126 connected with the second channel 121 is deposed at another end of the second flow area 12; and, the second inlet 124 is located between two first inlets 114 of the first flow area 11. Each of the first and the second channels 111, 121 has a plurality of ribs 112, 122. A vertical or horizontal furrow 113, 113a, 123, 123a is obtained between every two adjacent ribs 112, 122 so that flow paths are obtained by serially connecting a plurality of furrows 113, 113a, 123, 123a.

The seal 23, 32 is correspondingly deposed over rims of the interconnect set 1 to prevent operational fluids from leaking out or mixing up.

The first and the second channels 111, 121 are respectively deposed curvedly at a brim corresponding to the first and the second outlets 116, 126. A plurality of first deflectors 115, 125 are correspondingly deposed outside of an end of each of the first and the second inlets 114, 124; and, a second deflector 117, 127 is deposed outside of an end of each of the first and the second outlets 116, 126.

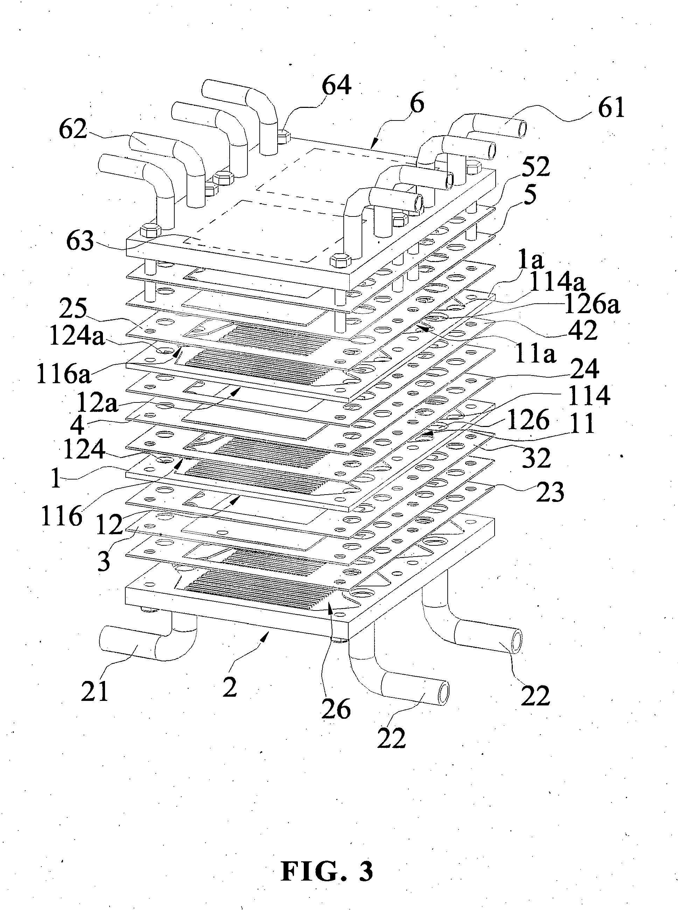

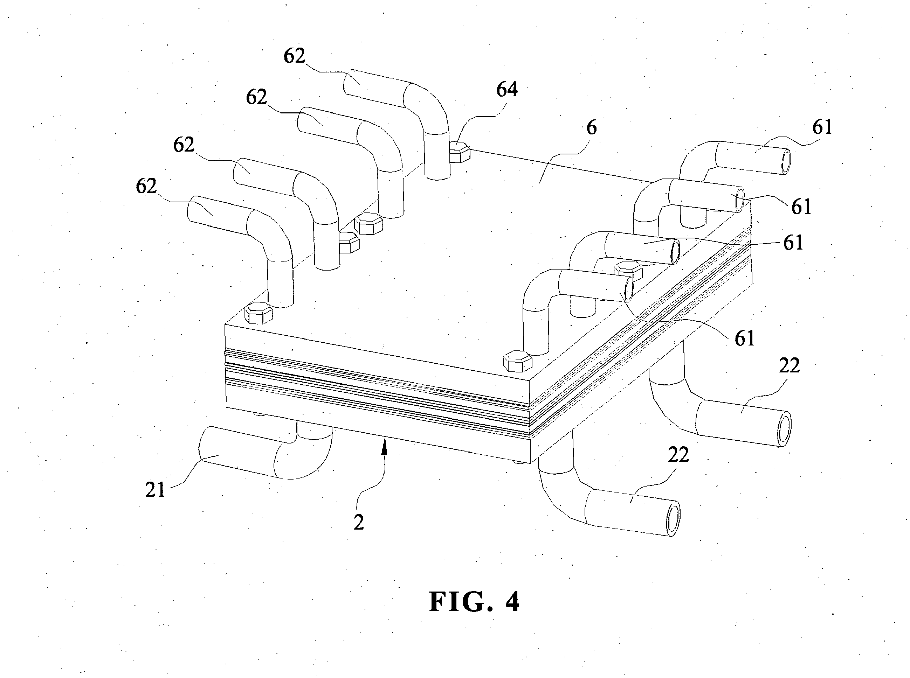

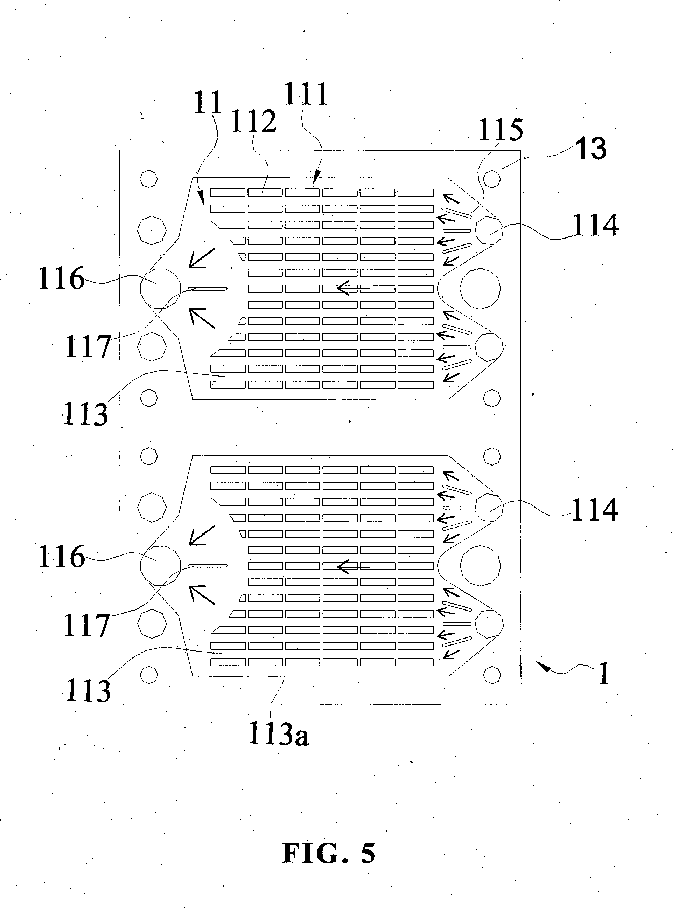

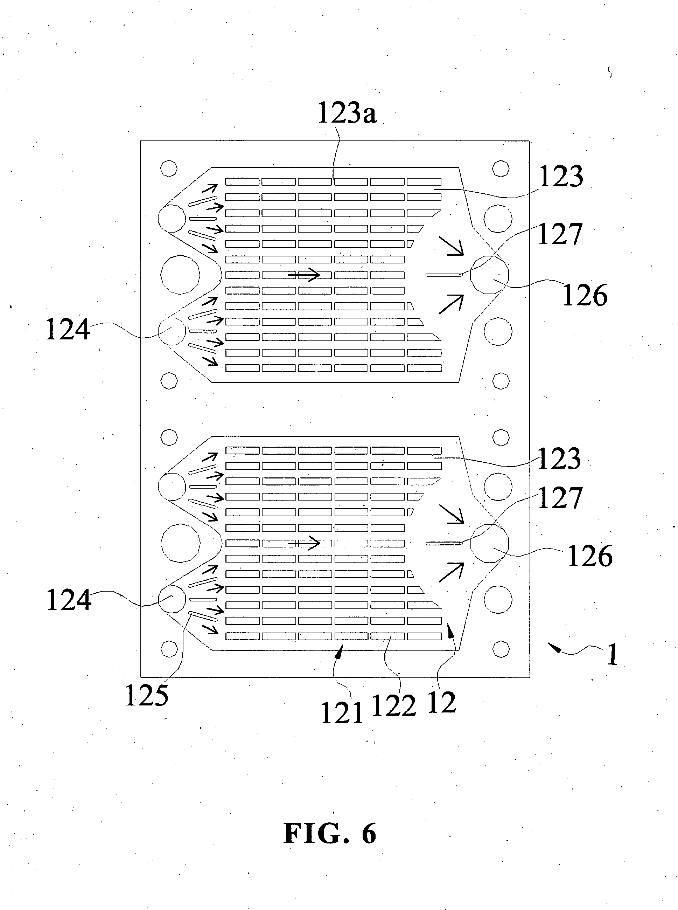

Please refer to FIG.3 to FIG.6, which are an explosive and a perspective views showing an assembly, and views showing flow paths of operational fluids, according to the preferred embodiment of the present invention. On assembling the present invention, a pair of two parallel-adhered bases 2 is obtained first, where a first and a second outlet tubes 21,22 are respectively connected at two ends of the base 2. A pair of parallel-adhered interconnects of a first interconnect set 1 is deposed on the bases 2 respectively, and a pair of parallel-adhered interconnects of a second interconnect set 1a is deposed on the first interconnect set 1 respectively. A pair of parallel-adhered covers 6 is deposed on the second interconnect set 1a, where a first and a second inlet tubes 61, 62 are respectively connected at each of two opposite ends of the cover 6. A pair of parallel-adhered first electricity-generating substrates 3 is respectively deposed between the bases 2 and the first interconnect set 1 where seals 23, 32 are deposed between the first electricity-generating substrates 3 and the bases 2 as well as between the first electricity-generating substrates 3 and the first interconnect set 1 to prevent operational fluids from leaking out or mixing up. First outlets 116, 116a are respectively corresponding to openings of the first outlet tubes 21; and second outlets 126, 126a at the opposite end are respectively corresponding to openings of the second outlet tubes 22. A pair of parallel-adhered second electricity-generating substrates 4 is deposed between the first interconnect set 1 and the second interconnect set 1a. The first and the second interconnect sets 1,1a are contacted with the second electricity-generating substrates 4 with seals 24, 42 to prevent the operational fluids from leaking out or mixing up. A pair of parallel-adhered third electricity-generating substrates 5 is deposed between the covers 6 and the second interconnect set 1a where seals 25, 52 are deposed between the electricity-generating substrates 5 and the second interconnects 1a as well as between the electricity-generating substrates 5 and the covers 6 both to prevent the operational fluids from leaking out or mixing up. First inlets 114, 114a are respectively corresponding to openings of the first inlet tubes 61; and, second inlets 124, 124a at the opposite end are respectively corresponding to openings of the second inlet tubes 62. Third flow areas 26 of the bases 2 are respectively corresponding to second flow areas 12 of the first interconnect set 1; first flow areas 11 of the first interconnect set 1 are respectively corresponding to second flow areas 12a of the second interconnect set 1a; first flow areas 11a of the second interconnect set 1a are respectively corresponding to fourth flow areas 63 of the covers 6; and, with the help of locking parts 64, the whole package is locked to assemble a number of interconnects according to user's actual requirements to obtain better utilization.

On using the present invention, a required first operational fluid is directed from the first inlet tubes 61 of the covers 6, where the first operational fluid is guided to flow from the first inlets 114a of the first flow areas 11a on the second interconnect set 1a to the first channels 111a of the second interconnect set 1a; then to flow from the first channels 111 a to the first outlets 116a of the second interconnect set 1a; then to flow through the first outlets 116 of the first flow areas 11 of the first interconnect set 1; and, finally, to flow directly to the first output tubes 21 of the bases 2. Another portion of the first operational fluid is guided to flow directly from the first inlet tubes 61 of the covers 6 to the first inlets 114 of the first flow areas 11 on the first interconnect set 1; then to flow from the first inlets 114 to the first channels 111 of the first interconnect set 1; then to flow from the first channels 111 to the first outlets 116 of the first interconnect set 1; and, finally, to flow to the first output tubes 21 of the bases 2. The remaining portion of the first operational fluid flows directly from the first inlet tubes 61 of the covers 6 to the third flow areas 26 on the bases 2 to be outputted through the first output tubes 21 of the bases 2.

A second operational fluid is directed to flow from the second inlet tubes 62 of the covers 6 to the second outlets 126a of the second flow areas 12a of the second interconnect set 1a through the fourth flow areas 63 of the covers 6; and, finally, to flow directly to the second output tubes 22 of the bases 2. Another portion of the second operational fluid is guided to flow directly from the second inlet tubes 62 of the covers 6 to the second channels 121a of the second interconnect set 1a through the second inlets 124a of the second flow areas 12a of the second interconnect set 1a; then to flow from the second channels 121a to the second outlets 126a of the second flow areas 12a; and, finally, to be outputted through the second output tubes 22 of the bases 2. The remaining portion of the second operational fluid is guided to flow directly from the second inlet tubes 62 of the covers 6 to the second channels 121 of the first interconnect set 1 through the second inlets 124 of the second flow areas 12 of the first interconnect set 1; then to flow from the second channels 121 to the second outlets 126 of the second flow areas 12 of the first interconnect set 1; and, finally, to be outputted through the second output tubes 22 of the bases 2. With these two different operational fluids of counterflow flowing through the first and second flow areas 11, 11a, 12, 12a adhered to the first 3, the second 4 and the third 5 electricity-generating substrates, electricity is generated.

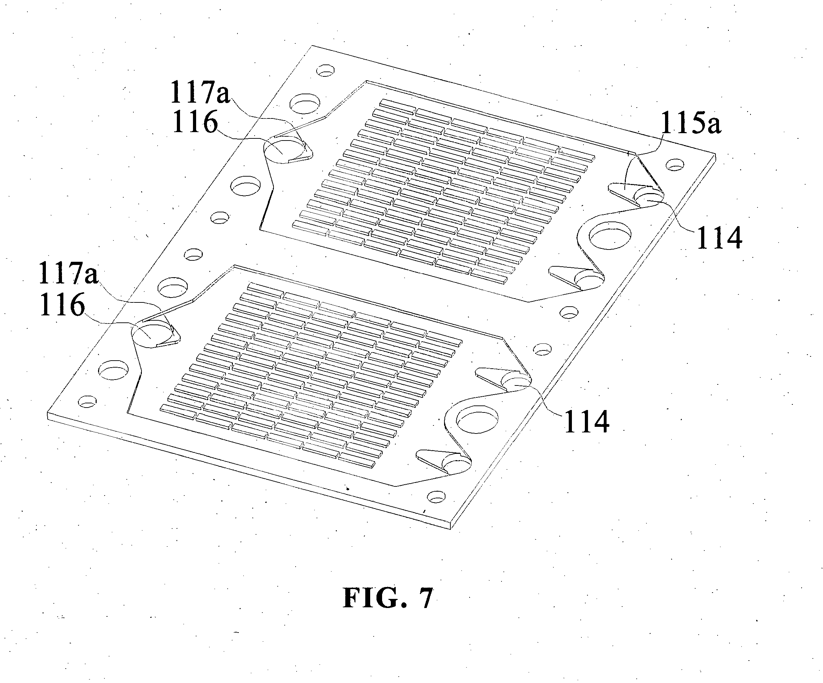

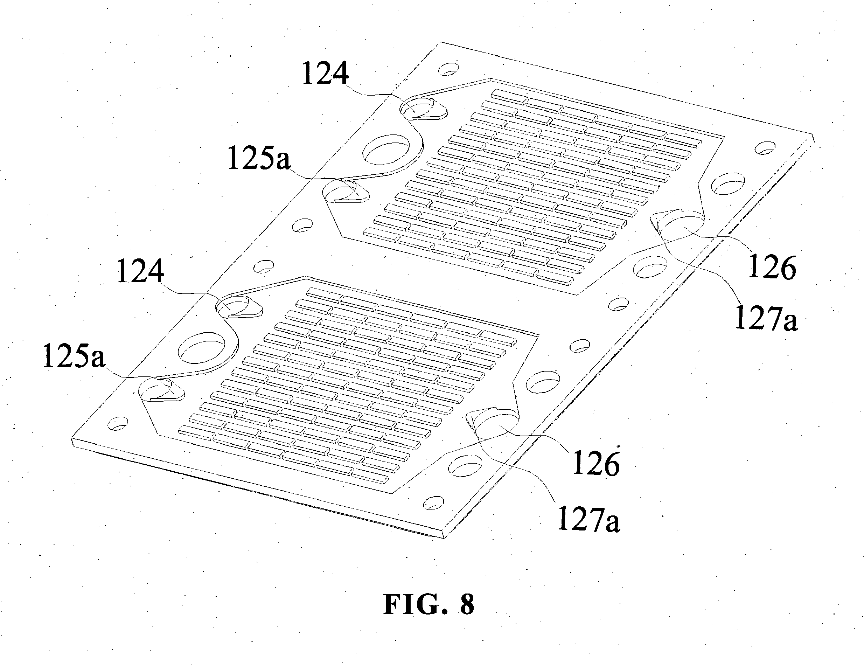

Please refer to FIG.7 and FIG.8, which are perspective views showing two opposite surfaces of another preferred embodiment according to the present invention. As shown in the figures, raised first deflectors 115a, 125a are deposed at brims of a first and a second inlets 114, 124; and, raised second deflectors 117a, 127a are deposed at brims of a first and a second outlets 116, 126.

Please refer to FIG.1, FIG.9 and FIG. 10, which are a perspective view showing a surface of a preferred embodiment and views showing two interconnects adhered in a serial way and four interconnects adhered both in a serial and a parallel ways, according to the preferred embodiment of the present invention. As shown in the figures, the present invention is characterized in that operational fluids of a fuel cell (FC) are evenly and smoothly flowed through opposite surfaces of interconnects to obtain a good utilization of an FC stack, where the interconnects are adhered according to user's actual requirements to obtain an interconnect set 1. A seal 23, 32 used in the present invention is correspondingly deposed at rims of the interconnect set 1 to prevent operational fluids from leaking out or mixing up. The present invention is a quite direct way for improving the electricity generation efficiency of an FC stack, where an assembly of electricity-generating substrates is coordinated with a variety of the interconnect set 1 and the seal 23, 32. As comparing to assembling an FC stack with electricity-generating substrates of a large scale, the electricity-generating substrates used in the present invention are not broken easily. A large scale area for chemical reaction is obtained by assembling interconnects in a parallel and/or serial way; the difficulty in disassembling the FC stack is reduced; and, a space used for an assembled FC stack are greatly saved. Moreover, a proper number of interconnects can be assembled according to user's actual requirements to obtain better utilization.

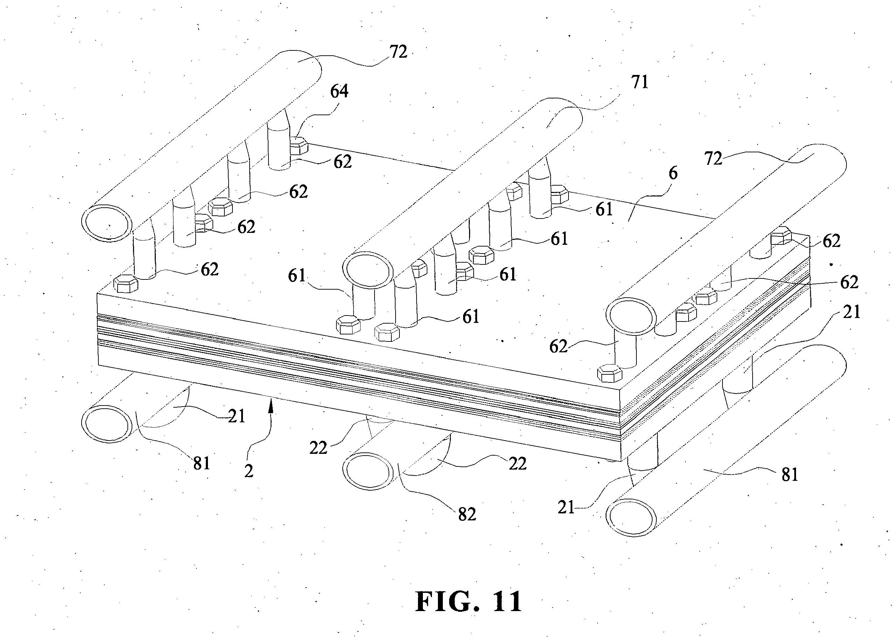

Please refer to FIG.11, which is a view showing another assembly of the preferred embodiment according to the present invention. As shown in the figure, first and second inlet tubes 61, 62 are further connected to supply tubes 71, 72 of operational fluids for filling a first and a second operational fluids. And, first and second outlet tubes 21, 22 of operational fluids are further connected to exhaust tubes 81, 82 of operational fluids for draining the first and the second operational fluids. By the design shown in FIG.1, FIG.9 and FIG.10, the operational fluids are supplied through the inlet tubes 61, 62 by the supply tubes 71, 72 of operational fluids; and are exhausted through the outlet tubes 21, 22 by the exhaust tubes 81, 82 of operational fluids.

## Claims

1. Interconnect set (1) for a planar solid oxide fuel cell, said interconnect set comprising:
(a) a plurality of adhered interconnects arranged in a plane and formig a unit, each of said interconnects comprising:
(i) a first flow area (11) having:
- a first channel (111);
- more than one first inlet (114); and
- a first outlet (116);
and
(ii) a second flow area (12) having
- a second channel (121);
- more than one second inlet (124); and
- a second outlet (126);
and
(b) a seal (13), that is correspondingly deposed over rims of said interconnects of said interconnect set (1) to prevent operational fluids from leaking out,
wherein said first flow areas (11) are deposed on a surface of said interconnect set and said second flow areas (12) are deposed on an opposite surface of said interconnect set,
wherein in each first flow area (11) said first inlets (114) are connected with said first channel (111) at an end of said first flow area, and said first outlet (116) is connected with said first channel (111) at the other end of said first flow area,
wherein in each second flow area (12) said second inlets (124) are connected with said second channel (121) at an end of said second flow area, and said second outlet (126) is connected with said second channel (121) at the other end of said second flow area, **characterized in that**
two of said second inlets (124) are deposed at two sides of said first outlet (116) of said first flow area, and said second outlet (126) is deposed between two of said first inlets (114) of said first flow area.

2. Interconnect set according to claim 1, wherein said interconnects are adhered in a parallel way.

3. Interconnect set according to claim 1, wherein said interconnects are adhered in a serial way.

4. Interconnect set according to claim 1, wherein said interconnects are adhered both in a parallel and a serial ways.

5. Interconnect set according to one of claims 1 to 4, wherein said first inlet (114) is connected with a first inlet tube (61).

6. Interconnect set according to claim 5, wherein said first inlet tube (61) is connected with a supply tube of an operational fluid.

7. Interconnect set according to one of claims 1 to 6, wherein said first outlet (116) is connected with a first outlet tube (21).

8. Interconnect set according to claim 7, wherein said first outlet tube (21) is connected with an exhaust tube of an operational fluid.

9. Interconnect set according to one of claims 1 to 8, wherein said second inlet (124) is connected with a second inlet tube (62).

10. Interconnect set according to claim 9, wherein said second inlet tube (62) is connected with a supply tube of an operational fluid.

11. Interconnect set according to one of claims 1 to 10, wherein said second outlet (126) is connected with a second outlet tube (22).

12. Interconnect set according to claim 11, wherein said second outlet tube (22) is connected with an exhaust tube of an operational fluid.

13. Interconnect set according to one of claims 1 to 12, wherein each channel of said first channel (111) and said second channel (121) has a plurality of ribs (112, 122), and wherein a furrow (113, 113a, 123, 123a) is located between each two adjacent ribs, said furrow is selected from a group consisting of furrows (113) extending in lengthwise direction between the ends of said flow areas and cross furrows (113a, 123a) extending perpendicular to said lengthwise furrows (113, 123), and a plurality of said furrows is serially connected to obtain a plurality of flow paths.

## Patentansprüche

1. Interkonnektorreihe (1) für eine planare Festoxid-Brennstoffzelle, wobei die Interkonnektorreihe umfasst:
(a) eine Vielzahl von verbundenen Interkonnektoren, die in einer Ebene angeordnet sind und eine Einheit bilden, wobei jeder der Interkonnektoren umfasst:
(i) einen ersten Strömungsbereich (11), der Folgendes beinhaltet:
- einen ersten Kanal (111);
- mehr als einen ersten Einlass (114); und
- einen ersten Auslass (116);
und
(ii) einen zweiten Strömungsbereich (12), der Folgendes beinhaltet:
- einen zweiten Kanal (121);
- mehr als einen zweiten Einlass (124); und
- einen zweiten Auslass (126);
und
(b) eine Dichtung (13), die korrespondierend über den Rändern der Interkonnektoren der Interkonnektorreihe (1) angeordnet ist, um das Austreten von Betriebsfluiden zu verhindern,
wobei die ersten Strömungsbereiche (11) auf einer Oberfläche der Interkonnektorreihe angeordnet sind und die zweiten Strömungsbereiche (12) auf einer entgegengesetzten Oberfläche der Interkonnektorreihe angeordnet sind,
wobei die ersten Einlässe (114) in jedem ersten Strömungsbereich (11) an einem Ende des ersten Strömungsbereichs mit dem ersten Kanal (111) verbunden sind, und der erste Auslass (116) an dem anderen Ende des ersten Strömungsbereichs mit dem ersten Kanal (111) verbunden ist,
wobei die zweiten Einlässe (124) in jedem zweiten Strömungsbereich (12) an einem Ende des zweiten Strömungsbereichs mit dem zweiten Kanal (121) verbunden sind, und der zweite Auslass (126) an dem anderen Ende des zweiten Strömungsbereichs mit dem zweiten Kanal (121) verbunden ist,
**dadurch gekennzeichnet, dass**
zwei der zweiten Einlässe (124) an zwei Seiten des ersten Auslasses (116) des ersten Strömungsbereichs angeordnet sind und der zweite Auslass (126) zwischen zwei der ersten Einlässe (114) des ersten Strömungsbereichs angeordnet ist.

2. Interkonnektorreihe nach Anspruch 1, wobei die Interkonnektoren parallel miteinander verbunden sind.

3. Interkonnektorreihe nach Anspruch 1, wobei die Interkonnektoren in Reihe miteinander verbunden sind.

4. Interkonnektorreihe nach Anspruch 1, wobei die Interkonnektoren sowohl parallel als auch in Reihe miteinander verbunden sind.

5. Interkonnektorreihe nach einem der Ansprüche 1 bis 4, wobei der erste Einlass (114) mit einem ersten Einlassrohr (61) verbunden ist.

6. Interkonnektorreihe nach Anspruch 5, wobei das erste Einlassrohr (61) mit einem Versorgungsrohr eines Betriebsfluids verbunden ist.

7. Interkonnektorreihe nach einem der Ansprüche 1 bis 6, wobei der erste Auslass (116) mit einem ersten Auslassrohr (21) verbunden ist.

8. Interkonnektorreihe nach Anspruch 7, wobei das erste Auslassrohr (21) mit einem Austrittsrohr eines Betriebsfluids verbunden ist.

9. Interkonnektorreihe nach einem der Ansprüche 1 bis 8, wobei der zweite Einlass (124) mit einem zweiten Einlassrohr (62) verbunden ist.

10. Interkonnektorreihe nach Anspruch 9, wobei das zweite Einlassrohr (62) mit einem Versorgungsrohr eines Betriebsfluids verbunden ist.

11. Interkonnektorreihe nach einem der Ansprüche 1 bis 10, wobei der zweite Auslass (126) mit einem zweiten Auslassrohr (22) verbunden ist.

12. Interkonnektorreihe nach Anspruch 11, wobei das zweite Auslassrohr (22) mit einem Austrittsrohr eines Betriebsfluids verbunden ist.

13. Interkonnektorreihe nach einem der Ansprüche 1 bis 12, wobei jeder Kanal aus dem ersten Kanal (111) und dem zweiten Kanal (121) eine Vielzahl von Lamellen (112, 122) aufweist, und wobei jeweils eine Rinne (113, 113a, 123, 123a) zwischen zwei benachbarten Lamellen angeordnet ist, wobei die Rinne aus einer Gruppe gewählt wird, die aus Rinnen (113) besteht, welche sich in Längsrichtung zwischen den Enden der Strömungsbereiche erstrecken, und Querrinnen (113a, 123a), die sich lotrecht zu den Längsrinnen (113, 123) erstrecken, und einer Vielzahl von Rinnen, die seriell miteinander verbunden sind, um eine Vielzahl von Strömungswegen zu erzielen.

## Revendications

1. Ensemble d'interconnexions pour une pile à combustible à oxyde solide plane, ledit ensemble d'interconnexions comprenant :
(a) une pluralité d'interconnexions adhérées arrangées dans un plan et formant une unité, chacune desdites interconnexions comprenant :
(i) une première zone d'écoulement (11) ayant :
- un premier canal (111) ;
- plus d'une première entrée (114) et
- une première sortie (116)
et
(ii) une seconde zone d'écoulement (12) ayant :
- un second canal (121) ;
- plus d'une seconde entrée (124) et
- une seconde sortie (126)
et
(b) une étanchéité (13) qui est déposée de manière correspondante sur des bords desdites interconnexions dudit ensemble d'interconnexions (1) pour empêcher des fuites de fluides opérationnels,
lesdites premières surfaces d'écoulement (11) étant déposées sur une surface dudit ensemble d'interconnexions et lesdites secondes surfaces d'écoulement (12) étant déposées sur une surface opposée dudit ensemble d'interconnexions,
cependant que dans chaque première zone d'écoulement (11) lesdites premières entrées (114) sont reliées audit premier canal (111) à une extrémité de ladite première zone d'écoulement et ladite première sortie (116) étant reliée audit premier canal (111) à l'autre extrémité de ladite première zone d'écoulement,
cependant que dans chaque seconde zone d'écoulement (12) lesdites secondes entrées sont reliées audit second canal (121) à une extrémité de ladite seconde zone d'écoulement et ladite seconde sortie (126) est reliée audit second canal (121) à l'autre extrémité de ladite seconde zone d'écoulement,
**caractérisé en ce que**
deux desdites secondes entrées (124) sont déposées sur deux côtés de ladite première sortie (116) de ladite première zone d'écoulement et ladite seconde sortie (126) est déposée entre deux desdites premières entrées (114) de ladite première zone d'écoulement.

2. Ensemble d'interconnexions selon la revendication 1, lesdites interconnexions étant adhérées de manière parallèle.

3. Ensemble d'interconnexions selon la revendication 1, lesdites interconnexions étant adhérées en série.

4. Ensemble d'interconnexions selon la revendication 1, lesdites interconnexions étant adhérées à la fois de manière parallèle et en série.

5. Ensemble d'interconnexions selon l'une des revendications 1 à 4, ladite première entrée (114) étant reliée à un premier tube d'entrée (61).

6. Ensemble d'interconnexions selon la revendication 5, ledit premier tube d'entrée (61) étant relié à un tube d'alimentation d'un fluide opérationnel.

7. Ensemble d'interconnexions selon l'une des revendications 1 à 6, ladite première sortie étant reliée à un premier tube de sortie (21).

8. Ensemble d'interconnexions selon la revendication 7, ledit premier tube de sortie (21) étant relié à un tube d'échappement d'un fluide opérationnel.

9. Ensemble d'interconnexions selon l'une des revendications 1 à 8, ladite seconde entrée (124) étant reliée à un second tube d'entrée (62).

10. Ensemble d'interconnexions selon la revendication 9, ledit second tube d'entrée (62) étant relié à un tube d'alimentation d'un fluide opérationnel.

11. Ensemble d'interconnexions selon l'une des revendications 1 à 10, ladite seconde sortie (126) étant reliée à un second tube de sortie (22).

12. Ensemble d'interconnexions selon la revendication 11, ledit second tube de sortie (22) étant relié à un tube d'échappement d'un fluide opérationnel.

13. Ensemble d'interconnexions selon l'une des revendications 1 à 12, chaque canal dudit premier canal (111) et dudit second canal (121) ayant une pluralité de nervures (112, 122) et un sillon (113, 113a, 123, 123a) étant situé entre toutes les deux nervures adjacentes, ledit sillon étant sélectionné dans un groupe consistant en sillons (113) qui s'étendent dans le sens longitudinal entre les extrémités desdites zones d'écoulement et en sillons transversaux (113a, 123a) qui s'étendent perpendiculairement aux sillons dans le sens longitudinal mentionnés (113, 123) et une pluralité desdits sillons étant reliée en série pour obtenir des voies d'écoulement.
